# EUROPEAN PATENT APPLICATION

(11) **EP 4 841 265 A1**
(43) Date of publication of application: **18.11.2026**
(21) Application number: 25176163.1
(22) Date of filing: 13.05.2025
(51) Int. Cl.: G01N 35/00, B65G 1/04, B65G 1/06, B65G 1/133

(54) **METHODS FOR INSTRUCTING TO POSITION SAMPLE CONTAINER CARRIERS WITHIN A STORAGE DEVICE AND STORAGE DEVICES**

(71) Applicant: Beckman Coulter, Inc., Brea, CA 92821 (US)
(72) Inventor: MUELLER, Martin, 83727 Schliersee (DE)
(74) Representative: Paustian & Partner Patentanwälte mbB

(57) **Abstract**

A first aspect of the present disclosure is related to a method for instructing to position sample container carriers within a storage device,
wherein the storage device is configured to accommodate a plurality of sample container carriers; and
wherein the storage device comprises:
- a plurality of storage positions , each adapted for holding a sample container carrier;
- a handling mechanism for positioning the plurality of sample container carriers on the plurality of storage positions;
- an openable access section for removing one or more sample container carriers from the storage device, which provides, when open, access to at least some of the plurality of storage positions;

the method comprising:
- determining, based on accessibility data, one or more removal positions of the set of storage positions for a first sample container carrier, wherein the accessibility data comprises, for each storage position of a set of storage positions, information indicative of a respective accessibility score of said each respective storage position, wherein the set of storage positions is comprised in the plurality of storage positions; and
- instructing the handling mechanism to position the first sample container carrier at a first removal position of the one or more removal positions.

## Description

This disclosure is related to methods for instructing to position sample container carriers within a storage device and to computer program products, computer devices and storage devices.

Modern laboratories can have a sample container transportation system to move sample containers and/or sample container carriers (also referred to as: "racks") between various workstations, storage areas, etc. Internal experiences uncovered a need to remove sample container carriers from an online storage, e.g., a storage connected to the sample container transportation system, and transfer them into an offline storage, e.g., a storage remote from the sample container transportation system, typically when a longer storage term is expected and/or the storage capacity of the online storage is not sufficient to store all sample containers that are transported to the online storage. Improvements are desirable.

An object of the present disclosure is to improve storing of sample container carriers.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a method for instructing to position sample container carriers within a storage device,
wherein the storage device is configured to accommodate a plurality of sample container carriers; and
wherein the storage device comprises:
   - a plurality of storage positions , each adapted for holding a sample container carrier;
   - a handling mechanism for positioning the plurality of sample container carriers on the plurality of storage positions;
   - an openable access section for removing one or more sample container carriers from the storage device, which provides, when open, access to at least some of the plurality of storage positions;
the method comprising:
   - determining, e.g., by a computing device, based on the accessibility data, one or more removal positions of the set of storage positions for a first sample container carrier, wherein the accessibility data comprise, for each storage position of a set of storage positions, information indicative of a respective accessibility score of said each storage position, wherein the set of storage positions is comprised in the plurality of storage positions; and
   - instructing, e.g., by the computing device, the handling mechanism to position the first sample container carrier at a first removal position of the one or more removal positions.

In some examples, the method according to the present disclosure may comprise accessing, e.g., by the computing device, the accessibility data.

A sample container carrier may be a device for holding one or more sample containers, also referred to as "tubes", e.g. comprising biological material such as serum. A sample container carrier can also be referred to as "rack". Further, it can be configured to carry one single tube. Also, it may be adapted to carry multiple sample containers, e.g. in a grid structure. By means of container carriers, the tubes can be transported or moved in an automated laboratory system (ALS) along a transportation line system, especially between several ALS (work) stations, for instance by a conveying device or the like, wherein in the container carriers (empty or carrying one or more sample containers, e.g., tubes) are moved by conveying means of the conveying device. One or more of the ALS stations may be a storage device which is operatively connected to the conveying device (also referred to as "online storage"), being adapted to store one or more sample container carriers therein, e.g. for a given amount of time. Sample container carriers that are e.g., to be stored for a longer time span can be transferred into an offline storage of the laboratory, which is not connected to the conveying device. Typically, tubes are stored in the online storage device in sample container carriers, which can be extracted from the online storage device for further handling (e.g., for offline storage, disposal, further processing of the biological material contained therein, shipping to another laboratory/location, and the like).

To accommodate the sample container carriers, the storage device comprises the plurality of the storage positions, each position of that plurality of the storage positions being in particular adapted to positionally receive or hold in place an individual sample container carrier. When placed in one of the sample container carriers, the sample containers e.g., the sample tubes, are preferably held in an upright position.

The storage device may comprise one or more groups of storage positions. Each group of groups of storage position may comprise one or more storage positions, e.g., exactly one position or a plurality thereof. In particular, the one or more groups of storage positions may constitute a partition of the plurality of storage positions, i.e., the plurality of storage positions may be partitioned into one or more mutually disjoint groups of storage positions. The groups of storage positions may be arranged in the form of respective shelves, trays, drawers, or the like. One single shelf or one single drawer or one single tray, respectively, may contain one single group of the groups of storage positions or two or more of the groups of storage positions. In some examples, a group of storage positions may include storage positions arranged in different shelves, trays, drawers, or the like. According to the present disclosure, a group of elements, e.g., a group of storage position, comprises one or more of those elements, e.g., one or more storage positions. In particular, a group of storage positions may consist of a single storage position or a plurality of storage positions. In particular, each group of the one or more storage positions may be such that each storage position of that group is associated with the exact same accessibility score, so that that group of storage positions is associated with that accessibility score.

The shelves/trays/drawers may be arranged in a respective frame, thereby forming for example a cabinet. The storage device, particularly the frame/cabinet, may have a closing mechanism which is reversibly adjustable between a closing position and a release position. In the closing position, the closing mechanism allows for at least partially thermally insulating the interior of the frame/cabinet from the external environment and/or to at least partially protecting that interior (in particular, the biological samples contained in the sample containers in the interior) from contamination originating from the external environment. In the release position, the sample container carriers arranged in the interior of the frame/cabinet can be moved or pulled out from the frame/cabinet. The closing mechanism may comprise a lid or a door.

The handling mechanism of the storage device may be configured to position sample container carriers (e.g., racks) at storage positions, e.g. by inserting the sample container carriers individually into one of the respective storage positions. Further, the handling mechanism may be configured to pick up one of the sample container carriers that is presently located in one storage position and transfer the picked up sample container carrier into another storage position in the storage device. The latter storage position may be part of the same group of storage positions as the former storage position, or it may be part of a different group of the groups of storage positions. For example, the handling mechanism may be or may comprise a jointed-arm robot or a gantry robot. In particular, the handling mechanism is arranged in vicinity of the storage positions in a way that a handling member of the handling mechanism can reach all storage positions of the storage device. The handling member may have means to manipulate the sample container carriers and/or the sample containers.

The openable access section of the storage device may be or comprise the above-mentioned closing mechanism, e.g., a door or a lid. The openable access section is adapted to be reversibly openable and closable and provides, when open (e.g., when the closing mechanism is in its release position), access to at least some of the plurality of storage positions and, consequently, to the sample container carriers positioned in said storage positions. In the open state of the access section, the handling member of the handling mechanism can reach the location of storage positions that were made accessible by opening the access section.

The method according to the present disclosure comprises accessing accessibility data which characterize the degree of accessibility of each storage position of the set of storage position. For this purpose, in particular, the accessibility data comprises information about the individual accessibility score of the storage positions in the set of storage positions. As an example, the more accessible a storage position is, that is, the better said storage position is reachable/accessible by a user (which can be a human or a machine, such as a robot, e.g., for retrieving, via the openable access section, at least some of the sample storage container carrier stored in the storage device), the higher the accessibility score is. Two or more storage positions of the set of storage positions may have the same accessibility score. Accessing the accessibility data may be carried out by a computing device which is described in greater detail below. Accessibility data may be determined automatically as well and/or by a third party, in particular by another system and/or by a human user or information provider.

Based on the accessibility data, the one or more removal positions of the set of storage positions for the first sample container carrier is/are determined. In particular, a removal position of the one or more removal positions is a storage position for the first sample container carrier. Determining the removal positions may be performed by the computing device. In particular, determining the one or more removal positions may comprise comparing the accessibility scores of the storage positions, e.g. the available storage positions of the set of storage positions with one another and determine the one or more storage positions with highest accessibility scores. According to the present disclosure, the available storage positions are the storage positions that are not already occupied by sample container carrier. For example, determining the one or more removal positions may comprise ranking the storage positions, e.g., the available storage positions, of the set of storage positions according to the accessibility score. In particular, determining the one or more removal positions may comprise selecting as one or more removal positions the storage positions, e.g., the available storage positions, which rank the highest according to the accessibility score. As two or more storage positions may be equally convenient according to their accessibility score, the comparison of the accessibility scores of the available storage positions may provide a plurality of removal positions.

Instructing the handling mechanism to position the first sample container carrier in the first removal position may be carried out by the computing device. Therefore, the computing device may comprise a hardware and/or software control module which can be or is coupled to the handling mechanism. Instructing may be triggered by a handling logic that does not require (but can allow) human intervention.

In general, a container carrier to be removed from the online storage to be transferred to another location, e.g., an offline storage, is positioned into a target removal position of the storage device, using the handling mechanism. According to the present disclosure, the target removal position may be the first removal position.

In particular, the accessibility score of at least one, in particular two or more, more particularly all of the storage positions of the storage device is evaluated in order to identify whether the storage position would be suitable for position the first sample container carrier. Taking the accessibility of the plurality of storage locations into account enables the system to identify more and less suitable storage positions and consequently removal positions for at least some of the sample container racks located within the storage device. While an optimal storage position for a single rack can be determined, also removal positions for a sorted sequence of racks can be determined. By means of the method described herein, the storage device is advantageously prepared or optimized for a removal of the first sample container carrier and also further sample container carriers from the storage device. Accordingly, the first sample container carrier and further sample container carriers can be positioned in the storage device, i.e., in the first removal position and further identified removal positions, so that the sample container carriers can be easily localized and picked up by e.g., a human user and/or an external handling mechanism like a lab robot.

Exemplarily, the method according to the first aspect of the present disclosure may further comprise:
- accessing removal data (herein also referred to as "first removal data"), wherein the removal data comprises information indicative of a removal status of the first sample container carrier; and
- determining whether, based on the removal data, one or more removal positions of the set of storage positions are to be determined for the first sample container carrier,
wherein, in particular, determining the one or more removal positions and instructing the handling mechanism to position the first sample container carrier are carried out if it is determined that one or more removal positions are to be determined for the first sample container carrier.

In particular, the removal data may comprise, for each sample container carrier of the one or more sample container carriers (e.g., of the set of sample container carriers disclosed herein), respective information indicative of a removal status of that sample container carrier. For example, the one or more sample container carrier may comprise, e.g., consist of, the first sample container carrier.

In particular, according to the present disclosure, accessing removal data may comprise retrieving the removal status of each of the one or more sample container carriers. For instance, accessing removal data may comprise retrieving the removal status of the first sample container carrier. The removal status of each of the one or more sample container carriers may comprise information indicative of whether and/or when that sample container carrier is to be removed from the storage device. Said information may be a digital flag or tag of that sample container carrier. The information may specify one of several removal statuses of that sample container carrier, which, for instance, may be one of: "to be removed", "not to be removed", and "to be removed at 3pm". The "to be removed" status may mean, for example, that sample containers of that sample container carrier are close to their expiration date. According to the present disclosure, the removal status of a sample container carrier may comprise information indicative of a priority of the removal of that sample container carrier.

If, according to the removal status of the first sample container carrier, the first sample container carrier is to be removed from the storage device, the one or more removal positions for the first sample container carrier will be determined and the handling mechanism will be instructed to position the first sample container carrier at the first removal position. In particular, determining the one or more removal positions may comprise, e.g., if the one or more removal positions are a plurality of removal positions, selecting the first removal position among the one or more removal positions.

Advantageously, determining the removal position(s) and/or instructing or controlling the handling mechanism is carried out only when needed, thereby reducing non-mandatory or redundant positioning operations within the storage device.

In particular, determining whether one or more removal positions of the set of storage positions are to be determined for the first sample container carrier may comprise determining whether, according to the removal status of the first sample container carrier, the first sample container carrier is to be removed (e.g., is ready to be removed) . Alternatively, or in addition, determining the one or more removal positions and instructing the handling mechanism to position the first sample container carrier may be carried out if, according to the removal status of the first sample container carrier, the first sample container carrier is to be removed (e.g., is ready to be removed).

For instance, a sample container carrier is ready to be removed if it is determined that the further handling of at least some of the sample containers comprised in that sample container carrier is to be carried out outside the storage device. For instance, the further handling of a sample container may comprise one or more of: disposal, transportation to another laboratory/location/storage device, and further processing of the biological sample comprised in that sample container.

In this case, determining the removal position(s) for the first sample container carrier and/or instructing the handling mechanism are carried out only if that sample container carrier is to be removed, e.g., if all sample containers in that sample container carrier are to be transferred from to storage device to a send out position, e.g., so that they can be transported to another laboratory in a timely manner. This way, the storage positions with high accessibility, which may be limited in number, are only occupied by sample container carriers that need and are ready to be removed.

According to the present disclosure, the removal data may comprise information indicative of one or more of:
i. whether the first sample container carrier is to be removed;
ii. when the first sample container carrier is to be removed; and
iii. a priority of the removal of the first sample container carrier,
and wherein determining the one or more removal positions is based on the removal data.

The removal data of a sample container carrier may comprise information specifying that that sample container carrier shall be removed from the storage device. Additionally, or alternatively, the removal data of a sample container carrier may specify when, e.g. from which time point, at which time point, or in which time interval, that sample container carrier is to be removed. For example, the removal status of a sample container carrier may be "to be removed at 3pm", "to be removed after 3pm", or "to be removed from 3pm to 5 pm". In some examples, the removal data of a sample container carrier may specify when, e.g., during which lab shift, that sample container carrier is to be removed.

In some examples, the method according to the first aspect of the present disclosure may further comprise:
- accessing first category data (also referred to as storage position category data), wherein the first category data comprises, for each storage position of the set of storage positions, information indicative of a respective category of sample container carriers to be stored in said each storage position; and
- accessing second category data (also referred to as rack category data or container carrier category data) comprising information on a category of the first sample container carrier and/or of one or more further sample container carriers. In particular, determining the one or more removal positions may be further based on the first category data and the second category data.

In particular, a storage position of the plurality of storage positions may be associated to a plurality of categories. More particularly, each storage position of the plurality of storage positions may be associated to one or more respective categories. In particular, the second category data may comprise information on one or more categories of the first and/or further sample container carriers.

For example, sample container carriers stored or to be stored in the storage device may have one or more categories assigned thereto. In particular, each storage position of the set of storage position may be associated with one or more categories, i.e., with the one or more categories of sample container carriers to be stored in that storage position.

Exemplarily, determining the one or more removal positions may comprise determining, among the set of storage positions and by using the first category data and the second category data, at least one storage position, e.g., each storage position, such that the category of the first sample container carrier (and/or of further sample container carriers) matches the respective category of sample container carriers to be stored in that storage position.

By categorizing the storage positions (which can include categorizing already identified removal positions) and/or categorizing sample container carriers, a flexible and versatile handling of the sample container carriers is benefitted.

In some examples, the category of the first sample container carrier may be related to one or more of:
i. one or more tests already performed on at least one sample in the first sample container carrier;
ii. whether a rerun and/or a reflex is needed for at least one sample in the first sample container carrier;
iii. which rerun and/or reflex is needed for at least one sample in the first sample container carrier;
iv. how dangerous is at least one sample in the first sample container carrier;
v. a user that is supposed to handle the first sample container carrier;
vi. a final placement location of the first sample container carrier;
vii. one or more final placement conditions of the first sample container carrier;
viii. a reprocessing probability of at least one sample in the first sample container carrier; and
ix. an expiration time of at least one sample in the first sample container carrier.

For example, each sample container carrier stored or to be stored in the storage device may have one or more categories assigned thereto, each of those categories related to one or more of (i) to (ix). In particular, for each storage position of the plurality of storage positions or of the set of storage positions, the one or more categories associated with that storage position may be related to one or more of (i) to (ix).

A rerun for a sample is in particular a repetition of one or more of the tests assigned to a biological sample, so that the ALS repeats the same test/analysis on the same sample. A reflex for a sample is in particular a test assigned to that sample e.g., as a consequence of the result of one or more tests, different from the reflex test, carried out on that sample. A reflex for a sample may be automatically assigned, e.g., based on a set of rules or can be manually assigned e.g., by a physician. In particular, according to the present disclosure, the reprocessing probability a sample represents the likelihood that that sample needs a reflex and/or a rerun.

Handling of biological samples, which may comprise pathogens or other hazardous material, may be dangerous. Depending on the tests assigned to the sample, the probability that that sample contains pathogens or other hazardous material may increase. For instance, samples for which and HIV test is assigned may possibly comprise the HIV virus. Hence as a precaution their handling is different from the handling of samples that have standard blood test palette assigned thereto. In particular, in this case, the handling of sample container carriers including those samples may require dedicated safety protocols. Additionally, or alternatively, those racks may be stored in dedicated storage positions, e.g. positions separated from the storage positions for standard samples. This way, the risk of contamination of the storage device by hazardous material can be limited to certain regions of that device.

According to the present disclosure, a user can be a human or a robot configured to retrieve, via the openable access section, at least some of the sample container carriers stored in the storage device. Different storage positions may be associated to different users, taking into account access preferences of the users. For instance, for a given lab technician a particular region of the storage device may be ergonomically favorable to reach. If this is the case, the storage positions in that region may be associated to a category specifying that lab technician as a user. This way, if the category of the first sample container carrier specifies that lab technician as user, e.g., because that sample container carrier is to be removed during the shift of that lab technician, the handling mechanism is instructed to store the first sample container carrier in that region, i.e., the first removal position is located in that region.

The final placement location may be an external (e.g., offline) storage position, e.g., a cooled storage position, a dispatch/shipment department or region of the laboratory, a disposal region, and the like.

According to the present disclosure, the expiration time of a sample may indicate the time point after which that sample is to be disposed, e.g., because the result of tests carried out on that sample is no longer reliable e.g., due to sample degradation. In particular, the category of the first sample container carrier may be related to the expiration time for the sample container in the first sample container carrier with latest expiration time.

The advantage of particularly flexible and versatile handling of the sample container carriers achieved by categorizing the storage positions and/or the sample container carriers, is enhanced by using one, some or all of the above-mentioned categories.

Exemplarily, for each storage position of the set of storage positions, information indicative of the respective accessibility score of said each respective storage position may be indicative of one of: best accessibility; good accessibility; limited accessibility; and no accessibility.

For example, the storage positions of a shelf of a storage device may be partitioned in groups of storage positions with the same accessibility scores. For instance, a shelf of the storage device may have three mutually disjoint groups of storage positions, one group with best accessibility, another one with good accessibility and another one with limited accessibility. Alternatively, or in addition, the storage positions of one or more shelves of the storage device may belong to the same group of storage positions, i.e., those one or more shelf constitute a group of storage positions with the same accessibility score.

Other levels of accessibility scores, in particular intermediate levels, are possible. In some examples, accessibility scores may also be a natural number within a given numerical interval or a continuous accessibility score, e.g., a number comprised between 1 and 10. Also possible are accessibility score systems that are ordered not according to four or more levels, but only according to two levels (e.g. levels "high" and "low") or three levels (e.g. levels "high", "medium", and "low").

In some examples, one or more storage positions of the plurality of storage positions may be associated with a plurality of accessibility scores, so that each accessibility score is associated with a respective user. For instance, a storage position may be associated with four accessibility scores, i.e., one for each user of a group of users comprising a first robot, second robot, first human, second human. For example, those four scores may be: best accessibility (for the first robot); good accessibility (for the second robot); limited accessibility (for the first human); and no accessibility (for the second human).

Exemplarily, determining the one or more removal positions of the set of storage positions may be further based on one or more determination requirements.

For instance, determining the one or more removal positions may comprise determining, among the set of storage positions, the storage positions that fulfill the one or more determination requirements. In particular, the one or more removal positions are the storage positions of the set of storage positions that fulfill the one or more determination requirements. For example, the one or more determination requirement may comprise a first determination requirement and, optionally, a second determination requirement. For example, the first determination requirement for a storage position is the requirement that the accessibility score of that storage position is the highest among the accessibility scores of the storage positions of the set of storage positions. For example, the first determination requirement for a storage position is the requirement that the accessibility score of that storage position is the highest among the accessibility scores of the storage positions of a subset of the set of storage positions that fulfill the second determination requirement. In particular, the second determination requirement on a storage position is the requirement that that storage position is not occupied by a sample container carrier and/or, that, according to the first and the second category data, is associated to a category that matches the category of the first sample container carrier.

In some examples, determining the one or more removal positions may comprise determining, based on the accessibility data, the one or more removal positions for a set of sample container carriers, the set of sample container carriers comprising the first sample container carrier. Instructing the handling mechanism to position the first sample container carrier at the first removal position of the one or more removal positions may comprise instructing the handling mechanism to position each sample container carrier of the set of sample container carriers at a respective position of the one or more removal positions. In particular, the respective position of the one or more removal positions at which the first sample container carrier is positioned is the first removal position.

In those examples, more than one sample container carriers may be handled and positioned according to the accessibility score of the storage positions within the storage device.

For example, determining the one or more removal positions for the set of sample container carriers, say P1 sample container carriers, may comprise determining, among the set of sample container carriers, P2 storage positions, wherein the P2 is greater than or equal to P1 and the P2 storage positions have the highest accessibility scores among the accessibility scores of the storage positions of the set of storage positions. Determining the one or more removal positions for the set of sample container carriers may comprise selecting P1 of those P2 storage positions as the one or more removal positions.

For instance, determining the one or more removal positions may comprise determining, among the set of storage positions, the one or more removal positions so that one or more determination requirements are fulfilled. For example, the one or more determination requirement may comprise a third determination requirement and, optionally, the second determination requirement described above. For example, the third determination requirement for the one or more storage positions is the requirement that the accessibility scores of those storage positions are the highest among the accessibility scores of the storage positions of the set of storage positions. For example, the first determination requirement for a storage position is the requirement that the accessibility score of that storage position is the highest among the accessibility scores of the storage positions of the subset of the set of storage positions that fulfills the requirement that each storage position of that subset is not occupied by a sample container carrier.

Exemplarily, the method of the present disclosure may further comprise determining the set of sample container carriers such that each sample container carrier is to be removed.

Exemplarily, determining the one or more removal positions for the set of sample container carriers may be further based on the cardinality of the set of sample container carriers. For example, determining the one or more removal positions may be carried out by using at least a lookup table and/or a decision tree. In particular, the lookup table and/or the decision tree may be based on the accessibility data and may be configured to output information indicative of the one or more removal positions by using the cardinality of the set of sample container carriers.

The method of the first aspect of the present disclosure may further comprise assigning to each sample container carrier of the set of sample container carriers the respective position of the one or more removal positions according to one or more assignment criteria. In particular, those sample container carriers are ultimately positioned in the removal positions assigned according to the one or more assignment criteria.

In some examples, each sample container carrier of the set of sample container carriers may be associated to a respective rack identifier (e.g., an identification number or an alphanumeric string) that uniquely and unambiguously identifies that carrier. Alternatively, or in conjunction with the above, each storage position may be uniquely identified by a respective position identifier, which e.g. may be an identification number and/or letter. In general, the storage positions may be ordered according to an ordering of their position identifiers, e.g., according to the alphabetical/numerical ordering of those identifiers. If this is the case, the assignment criterion may be based on the rack identifier of the sample container carriers of the set of sample container carriers and the position identifiers of the one or more removal positions. In particular, that assignment criterion assigns to each sample container carriers of the set of sample container carrier a respective position of the one or more removal positions according to an ordering of the rack identifiers and an ordering of the position identifiers. For example, in such a way that the sample container carrier with lowest rack identifier is assigned to the removal position with lowest position identifier and sample container carrier with rack identifier higher than the identifier of another sample container carrier is associated with a position identifier which is higher that the position identifier with the other sample container carrier.

If the storage positions are arranged in a vertical grid, they can be ordered from left to right and from top to bottom. If this is the case, an assignment criterion may assign to each sample container carrier of the set of sample container carriers a respective removal position of the one or more removal positions from top to bottom and from left to right, following the ascending order of the rack identifiers of the sample container carriers of the set of sample of container carriers.

Exemplarily, each sample container carrier of the set of sample container carriers may be associated with a respective expiration time, that respective expiration time being e.g., the latest expiration time of the sample containers held in that carrier. If this is the case, an assignment criterion may assign to each sample container carrier of the set of sample container carriers a respective removal position of the one or more removal positions from top to bottom and from left to right, following the ascending order of the expiration time of the sample container carriers of the set of sample container carriers.

In addition or alternatively, the assignment criterion may be a specified, in particular user-specified, ordering/sequence according to which removal positions are assigned to the sample container carriers e.g., to implement an ordering/sequence according to which the sample container carriers are positioned at the removal positions. The latter ordering/sequence may for instance be the ordering/sequence for the removal of the sample container carriers which may be related to the further handling of those carrier or the removal preferences of the lab technician. For example, the ordering for the removal of the sample container carriers corresponds to an ordering of those sample container carriers in an offline storage device.

Alternatively or in addition, an assignment criterion may be such that sample container carriers which are to be removed together are assigned to storage positions that are arranged in the vicinity of one another in the storage device, so that the sample container carriers which are to be removed together are positioned at removal positions arranged in the vicinity of one another, with or without a specific order.

The one or more assignment criteria may comprise an assignment criterion based on one or more categories of the sample container carriers of the set of sample container racks, so that, for instance, sample container carriers with the same one or more categories are assigned to storage positions that are arranged in the vicinity of one another in the storage device and e.g., in an ascending order according to rack identifiers of the sample container carriers.

The possibility of assigning the removal positions to the sample container carriers according to one or more assignment criteria allows for streamlining the removal and, ultimately, the further handling of those sample container carriers.

Exemplarily, the method of the present disclosure may further comprise determining, among the plurality of storage positions, the set of storage positions, so that each storage position in the set of storage positions is not occupied by a sample container carrier.

The method according to the first aspect of the present disclosure may further comprise providing information, e.g., for an external handling device and/or for a graphical user interface, indicative of one or more of: the first sample container carrier, the first removal position, the category of the first sample container carrier, and the category associated with the first removal position.

That information may be provided for or to an external robot and/or human user, so that, for instance, the external robot and/or human user are informed about the storage position from which the first sample container carrier is to be picked up, how cautious the respective sample container carrier is to be handled, which security measures are to be taken, whether the sample container carrier is to be sent by express delivery, and the like. Additionally or alternatively, that information is provided for an external handling device and/or for a graphical user interface. Furthermore, that information may comprise accessibility data or accessibility scores. The sample container carriers can thus be processed efficiently in accordance with safety and deadline specifications.

In some examples, instructing the handling mechanism to position the first sample container carrier at the first removal position may comprise:
- checking if the first removal position is free;
and, if the first removal position is not free, in particular occupied with another sample container carrier:
- instructing the handling mechanism to position the first sample container carrier to a first storage position of the plurality of storage positions, and/or
- instructing the handling mechanism to move the other sample container carrier to a second storage position of the plurality of storage positions.

In particular, the first storage position and the second storage position are different from the first removal position. In some examples, the second storage position is the first storage position. Alternatively, the first storage position is different from the second storage position. For instance, a storage position, e.g., the first removal position is free if it is not occupied by a sample container carrier e.g., when the one or more removal positions are determined. In particular, the method may further comprise checking whether the first removal position has become free.

In particular, if the first removal position is occupied by another sample container carrier, the method allows for repositioning that other sample container carrier to another storage position (i.e., the second storage position) so that the first sample container carrier is ultimately located to the intended removal position. During the repositioning of the other sample container carrier, the first sample container carrier is parked at and/or temporarily positioned to another position of the storage device, i.e., to the first storage position. The first storage position may be determined by using the method of the present disclosure, e.g., by using the accessibility score of the removal positions of the storage device that are free. For instance, the first sample container carrier may be moved to the first removal position after the first removal position has become free.

Exemplarily, the method may further comprise causing the first sample container carrier to be moved to the first removal position after the first removal position has become free. Causing the first sample container carrier to be moved may comprise instructing the handling mechanism to move the first sample container carrier. Alternatively, or in addition, causing the first sample container carrier to be moved may comprise moving, e.g., by the handling mechanism, the first sample container carrier.

In those examples, a particularly efficient congestion handling is provided which entails an advantageous rearranging reorganizing and/or reordering of sample container carriers that are already positioned in the storage device.

A second aspect of the present disclosure is related to a computer program product,
comprising instructions which, when the program is executed by a computing system, cause the computing system to carry out a method according to the present disclosure.

A third aspect of the present disclosure is related to a computing device, comprising a processor configured to carry out a method of the present disclosure.

The computing device may be any kind of hardware and/or software based computing device. It may be, e.g., a personal computer, one or more network computer, a microcontroller, and/or an FPGA. The computing device may in particular be part of an assembly that further comprises the storage device, one or more further computing devices and/or one or more network devices. In particular, according to the present disclosure, a computing device may comprise one or more processors and one or more computer memories.

A fourth aspect of the present disclosure is related to a storage system comprising the computing device according to the third aspect of the present invention. In particular, the storage system comprises a storage device configured to accommodate a plurality of sample container carriers. The storage device further comprises:
- a plurality of storage positions , each adapted for holding a sample container carrier;
- a handling mechanism for positioning the plurality of sample container carriers on the plurality of storage positions; and
- an openable access section for removing one or more sample containers from the storage device, which provides, when open, access to at least some of the plurality of storage positions.

The processor of the computing device may be either configured to independently carry out the method of the present disclosure or it may be configured to receive instructions from another computing device outside of the storage device in order to carry out the method of the present disclosure.

A fifth aspect of the present disclosure is related to a computer-readable medium (e.g., one or more computer memories) comprising instructions which, when executed by a computer system, cause the computer system to carry out the method according to the first aspect of the present disclosure.

Advantages of the second, third, fourth and fifth aspects of the present disclosure can be derived analogously from the description of the method according to the first aspect.

### Brief description of the figures

Further advantages and features result from the following embodiments, some of which refer to the figures. The figures do not always show the embodiments to scale. The dimensions of the various features may be enlarged or reduced, in particular for clarity of description. For this purpose, the figures are at least partially schematized.
Fig. 1 illustrates a storage system according to this disclosure.
Fig. 2 illustrates a storage device according to this disclosure with a first number of sample container carriers positioned therein.
Fig. 3 illustrates the storage device according to this disclosure with a second number of sample container carriers positioned therein.
Fig. 4 illustrates the storage device according to this disclosure with a third number of sample container carriers positioned therein.
Fig. 5 illustrates a flow chart of a method according to this disclosure.
Fig. 6 illustrates a flowchart comprised in a method according to this disclosure.
Fig. 7 illustrates a storage device according to this disclosure with a number of sample container carriers positioned therein.

Although some aspects have been described in the context of an apparatus (or a system) in the present disclosure, the description of these aspects also represents a description of the corresponding method, where a block or device may correspond to a method step or a feature of a method step or at least a part of the method according to the present disclosure. Analogously, aspects described in the context of a method may also represent a description of a corresponding block, item, or feature of a corresponding apparatus or of a system that may in particular be distributed over different locations and is configured to exchange information between the different locations with respective communication means. In general, a disclosure of a described method also applies to a corresponding device (or apparatus) for carrying out the method or a corresponding system comprising one or more devices and vice versa. For example, if a specific method step is described, a corresponding device may include a feature to perform the described method, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise. As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

### Detailed description

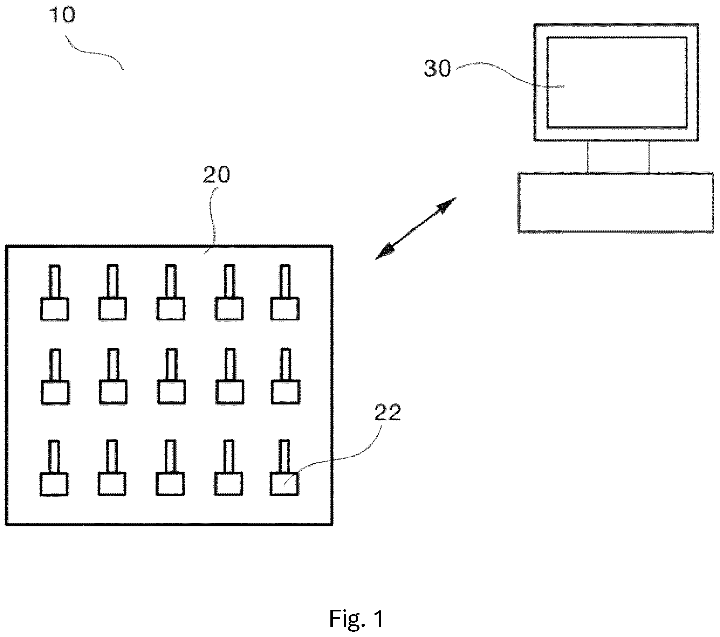

**Fig. 1** illustrates a storage system 10 according to the present disclosure. The system 10 comprises a storage device 20 and a computer 30.

The storage device 20 is configured to accommodate a plurality of sample container carriers 22. Therefore, the storage device 20 comprises a plurality of storage positions, each position of those storage positions being adapted for holding a sample container carrier. Furthermore, the storage device comprises a handling mechanism (not shown) for positioning the plurality of sample container carriers on the plurality of storage positions. The storage device comprises an openable access section (not shown) for removing one or more sample containers carriers from the storage device. The access section provides, when open, access to at least some of the plurality of storage positions.

The computer 30 is configured to execute at least one or more steps and/or sub-steps of a method according to the present disclosure. In particular the computer is configured to execute a method according to the present disclosure. In particular, the computer 30 comprises a processor configured to carry out the method according to the present disclosure. The computer 30 may be configured to execute a method according to the present disclosure by using a machine learning algorithm.

The computer 30 may be a local computer device (e.g. personal computer, laptop, tablet computer or mobile phone) with one or more processors and one or more computer memories or may be a distributed computer system (e.g. a cloud computing system with one or more processors and one or more computer memories distributed at various locations, for example, at a local client and/or one or more remote server farms and/or data centers). The computer 30 may comprise any circuit or combination of circuits. In one embodiment, the computer 30 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), any other type of processor or processing circuit. The computer 30 can be a network and/or cloud computer.

The computer 30 may comprise one or more computer memories. The one or more computer memories stores a computer program according to the second aspect of the present disclosure, i.e., a computer program comprising instructions which, when the program is executed by the computer 30, cause the computing system to carry out a method according to the present disclosure.

The computer 30 may comprise a Network Interface Controller, NIC, (not shown) configured to connect said device with one or more networks (e.g. an intranet, the internet, a cellular network, or the like). In other examples, the computer 30 may comprise a plurality of NICs. The first computing device 30 is in data communication with the storage device 20, for example by means of the NIC or by other means. In particular, the computer 30 may be a part of the storage device 20 and the data transfer may occur via a bus. Furthermore, the computer 30 may be configured to communicate with the storage device 20 to provide further functions such as monitoring the execution of the instructed positioning of the first rack and/or the set of racks.

The computer 30 can control a plurality of storage devices 20 concurrently. This way the computer 30 can be configured to organize a transfer of a sample/tube between several storage device systems 10 that the computer 30 controls or at least is configured to communicate with.

The computer 30 and the storage device 20 are illustrated as separate entities but can also be integrated together in one common housing. The computer 30 may be part of a central processing system of the storage device 20 and/or the computer 30 may be part of a subcomponent of the storage device, such as a sensor, a camera, the handling mechanism, and the like.

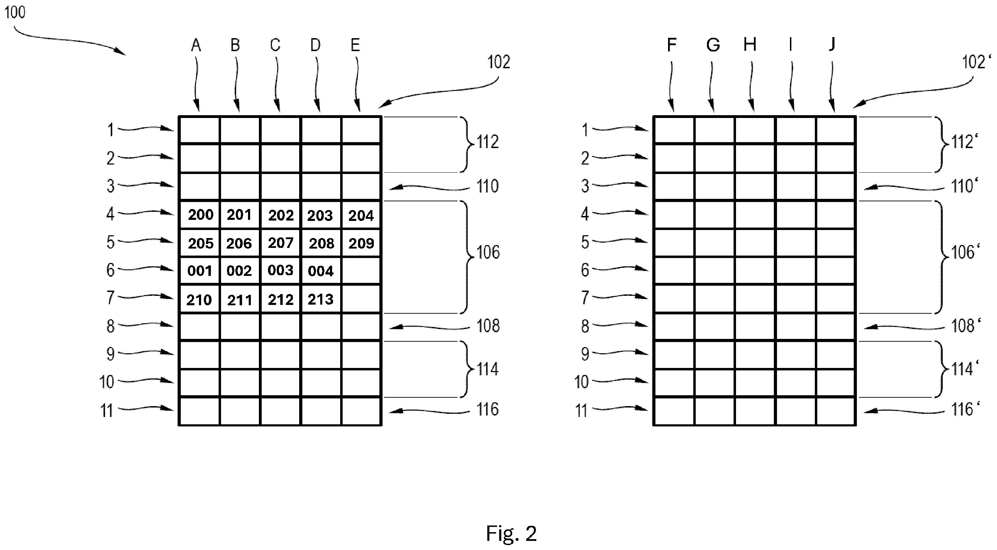

**Figs. 2** to **4** show schematic views of a storage device 100 that may be used, for example, in an automatic laboratory system (ALS). The storage device 100 may e.g., be comprised in a storage system 10 according to the present disclosure. The storage device 100 may be configured to accommodate a plurality of sample container carriers. In one example, the storage device 100 comprises a plurality of storage positions, each position of the plurality storage positions being adapted for holding a sample container carrier. The plurality of storage positions may be arranged in one or more shelving units, trays, or drawers 102, 102' of the storage device 100. For example, as schematically shown in figs. 2 to 4, the plurality of storage positions may be arranged in two shelving units, trays, or drawers 102, 102'. The number of shelving units, trays, or drawers 102, 102' may be different, e.g. greater than two.

In Figs. 2 to 4, the storage positions arranged in the shelving unit, tray, or drawer 102 are identified by columns A to E and rows 1 to 11 and the storage positions arranged in the shelving unit, tray, or drawer 102' are identified by columns F to J and rows 1 to 11. Hence, in those figures, 110 storage positions, i.e., storage positions A1 to E11 and F1 to J11 are depicted. The identification system of the storage positions, A1 to E11 and F1 to J11, is chosen solely for the purpose of this description; other systems to unambiguously identify each storage position are conceivable. Each of the storage positions A1 to E11 and F1 to J11 is adapted to positionally fix and/or hold in place a single sample container carrier, at least temporarily.

In some examples, the storage device 100 may comprise further shelving units, trays, or drawers (not shown) so that the storage device 100 comprises more than 110 storage positions. In particular, the storage device 100 may comprise more than 99, particularly more than 999 storage positions. In some other examples the storage device may consists of a single shelving unit, tray, or drawer and, hence, comprises storage positions A1 to E11.

The storage positions A1 to E11 and F1 to J11 may be partitioned into groups of storage positions with the same accessibility score. For example, with reference to figs. 2 to 4, those storage positions may be partitioned into eight groups:
- a first group 106 (storage positions A4 to E7) with highest accessibility score (AS), i.e., AS = 7, (e.g., as the storage positions in the first group 106 are located in an area of the storage device 100 which is the best to reach by a user or by an external handling device);
- a second group 106' (storage positions F4 to J7) with accessibility score (AS), i.e., AS = 6;
- a third group 108, 110 (storage positions A3 to E3 and A8 to E8) with accessibility score AS = 5;
- a fourth group 108', 110' (storage positions F3 to J3 and F8 to J8) with accessibility score AS = 4;
- a fifth group 112, 114 (storage positions A1 to E2 and A9 to E10) with accessibility AS = 3;
- a sixth group 112', 114' (storage positions F1 to J2 and F9 to J10) with accessibility AS = 2;
- a seventh group 116 (storage positions A11 to E11) with accessibility score, AS = 1; and
- an eighth group 116' (storage positions F11 to J11) with lowest accessibility score, AS = 0, (e.g., as the storage positions in the eighth group 116' are located in an area of the storage device 100 which is the worst to reach by a user or by an external handling device).

The accessibility scores 0 to 7 described above are defined so that the accessibility increases as the accessibility score increases. In particular, a group with accessibility score N has a better accessibility than a group with accessibility score N-1 and a worse accessibility than a group with accessibility score N+1.

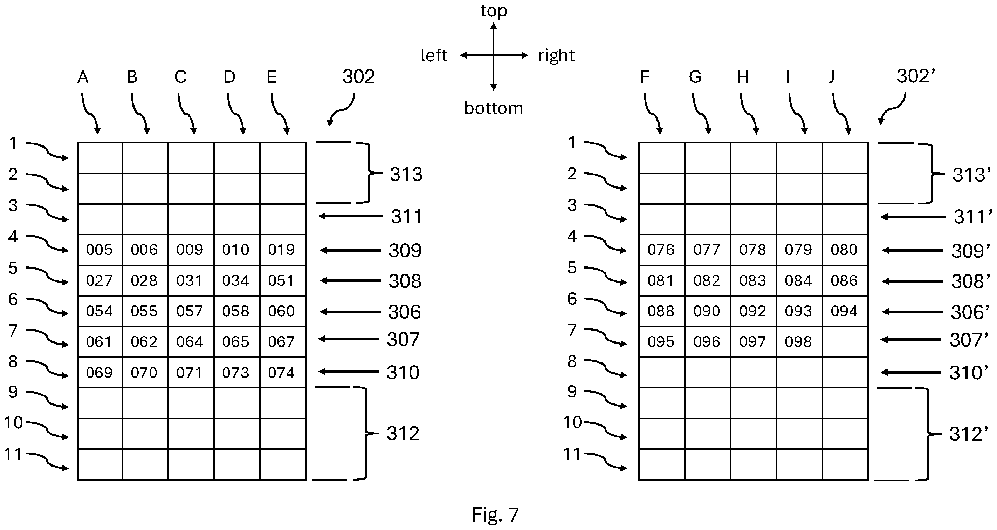

**Fig. 7** shows a schematic view of a storage device 300 that may be used, for example, in an automatic laboratory system (ALS). The storage device 300 may be comprised in a storage system 10 according to the present disclosure. The storage device 100 may be configured to accommodate a plurality of sample container carriers. In one example, the storage device 100 comprises a plurality of storage positions, each position of the plurality storage positions being adapted for holding a sample container carrier. The plurality of storage positions is arranged in a first shelving unit 302 and a second shelving unit 302'. In particular, each of the two shelving units 302, 302' comprises several storage positions arranged into a plurality of shelves. The storage positions arranged in the shelving unit 302 are identified by columns A to E and rows 1 to 11 and the storage positions arranged in the shelving unit 302' are identified by columns F to J and rows 1 to 11. Each of the storage positions A1 to E11 and F1 to J11 is adapted to positionally fix and/or hold in place a single sample container carrier, at least temporarily.

As used herein, the terms "left," "right," "top," and "bottom" refer to the orientation of the shelving units 302, 302' as presented in the drawings. The left-right direction is a horizontal direction, and the top-bottom direction is the vertical direction. Referring to fig. 7, the shelving units 302, 302' is shown with its front face oriented towards the viewer. In particular, the leftmost storage positions of the shelving unit 302 are the storage positions A1, A2, A3, A4, A5, A6, A7, A8, A9, A10, A11. The rightmost storage positions of the shelving unit 302 are the storage positions E1, E2, E3, E4, E5, E6, E7, E8, E9, E10, E11. The uppermost storage positions of the shelving unit 302 are the storage positions A1 to E1 and the lowermost storage positions of the shelving unit 302 are the storage positions A11 to E11.

The storage positions A1 to E11 and F1 to J11 may be partitioned into groups of storage positions with the same accessibility score. For example, with reference to fig. 7, those storage positions may be partitioned into the groups described in the table below:

**Table 1**

| Group | Storage positions | Accessibility score (AS) | Group | Storage positions | Accessibility score (AS) |
|---|---|---|---|---|---|
| 306 | A6-E6 | 15 | 310 | A8-E8 | 7 |
| 306' | F6-J6 | 14 | 310' | F8-E8 | 6 |
| 307 | A7-E7 | 13 | 311 | A3-E3 | 5 |
| 307' | F7-J7 | 12 | 311' | F3-J3 | 4 |
| 308 | A5-E5 | 11 | 312 | A9-E11 | 3 |
| 308' | F5-J5 | 10 | 312' | F9-J 1 | 2 |
| 309 | A4-E4 | 9 | 313 | A1-E2 | 1 |
| 309' | F4-J4 | 8 | 313' | F1-J2 | 0 |

The accessibility scores 0 to 15 above are defined so that the accessibility increases as the accessibility score increases. In particular, a group with accessibility score N has a better accessibility than a group with accessibility score N-1 and a worse accessibility than a group with accessibility score N+1.

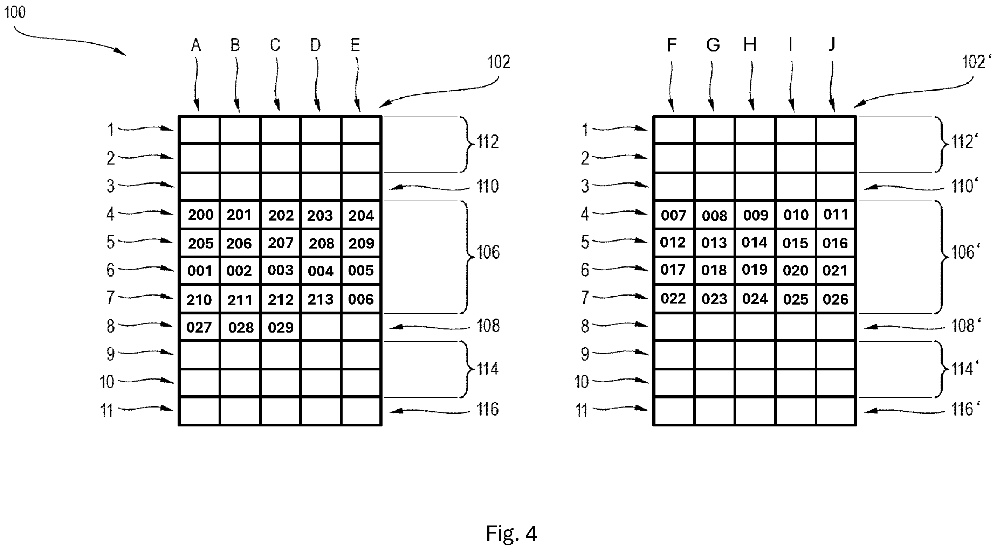

In Figs. 2 to 4 and in fig. 7, the sample container carriers (also referred to as racks) held in the storage device 100 are identified by a respective identifier which is a three-digit number. For example, the sample container carriers shown in Fig. 2 are referred to as "001", "002", "003" and "004". In particular, said three-digit number may be an individual identification number (ID or rack ID), assigned to the sample container carriers / racks. This is chosen for the purpose of this description; other ID systems are conceivable and not excluded. Each of the Figs. 2 to 4 represent a respective scenario in which a respective number of sample container carriers are positioned in a storage device 100. For instance, Fig. 2 represents a scenario in which 18 sample container carriers are positioned in the storage device 100 and Fig. 4 represents a scenario in which 43 sample container carriers are positioned in the storage device 100.

Further, the storage device 100 and/or the storage device 300 may comprise a handling mechanism (not shown) arranged in vicinity of all the storage positions in a way that a handling member of the handling mechanism can reach all storage positions of the storage device 100, 300 such that a rack can be moved from one of the storage positions to another one. The handling mechanism may be or comprise at least one robot. The handling mechanism is configured to distribute the plurality of sample container carriers (or racks) to the plurality of storage positions and to insert each of the racks individually into one of the storage positions. In addition, or alternatively, the handling mechanism may be configured to reorder/rearrange sample container carriers in the storage positions.

The storage device 100 and/or the storage device 300 may comprise an openable access section or two or more openable access sections (not shown), wherein the respective openable access section may have a lid or a door and/or a closing mechanism (not shown). When fully or at least partially opened, the respective openable access section grants access to an external user or handling device to at least some of the storage positions. To remove one or more sample containers from the storage device 100, 300, the corresponding openable access section must be fully or at least partially opened. In an open state of the access section, a user (e.g. a human user or a machine, such as an external robot) can reach the location of storage positions that were made accessible by opening the access section.

The storage device 100 and/or the storage device 300 may have computation means, e.g., the computer 30, to perform one, some or all of the steps, sub-steps of the method according to the present disclosure, e.g., a method for instructing to position sample container carriers within a storage device 100, 300. Additionally, or alternatively, the storage device 100 and/or the storage device 300 may be in data communication to a computer, e.g., the computer 30 schematically depicted in Fig. 1 and described above, which may be configured to carry out the method according to the present disclosure.

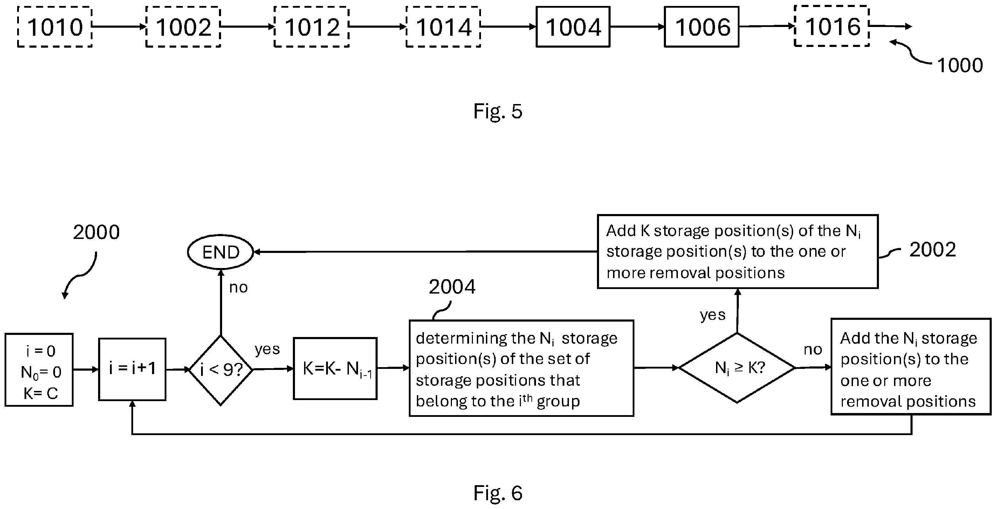

**Fig. 5** shows a flowchart 1000 of a computer implemented method for instructing to position sample container carriers (also referred to as "racks") within the storage device system 10 as schematically depicted in Fig. 1 and described above and/or the storage device 100 as schematically depicted in figs. 2 to 4 and described above, and/or the storage device 300 as schematically depicted in fig. 7 and described above.

The method comprises determining 1004, based on the accessibility data, one or more removal positions for a set of sample container carriers.. For example, with reference to the storage device 100, the accessibility data may comprise information associating each storage position of the set of storage positions (e.g., of the storage positions A1 to E11 and F1 to J11), the respective group of the eight groups to which that position belongs. Moreover, the accessibility data may comprise information associating each of the eight group to the accessibility score of that group. For instance, with reference to the storage device 300, the accessibility data may comprise information associating each storage position of the set of storage positions (e.g., of the storage positions A1 to E11 and F1 to J11), the respective group of the 16 groups to which that position belongs. Moreover, the accessibility data may comprise information associating each of the 16 groups to the accessibility score of that group.

In particular, determining 1004 the one or more removal positions depends on cardinality, C, i.e., on the number of elements, of the set of sample container carriers. Determining 1004 the one or more removal positions may be performed by the computer 30.

In some examples, determining 1004 the one or more removal positions may comprise determining, among the set of storage positions, the storage positions that fulfill the one or more determination requirements. For example, the one or more determination requirement may comprise the requirement that the accessibility scores of those storage positions are the highest among the accessibility scores of the storage positions of the set of storage positions. In some cases, the one or more determination requirement may comprise the requirement that the accessibility score of that storage position is the highest among the accessibility scores of the storage positions of a subset of the set of storage positions that fulfills the requirement that each storage position of that subset is not occupied by a sample container carrier. In particular, determining 1004 the one or more removal positions may comprise comparing the accessibility scores of the storage positions of the set of storage positions and determining, among the set of storage positions, the C storage positions with highest accessibility score as the one or more removal positions. For example, determining 1004 the one or more removal positions may comprise the workflow described by the flowchart 2000 depicted in **fig. 6****,** wherein, Nᵢ is a non-negative integer equal to the number of storage position(s) of the set of storage positions which belongs to the i^{th} group, N₀=0, and C is the cardinality, C, of the set of sample container carriers. In particular, the K storage position(s) of the Nᵢ storage position(s) that, at 2002, are added to the one or more removal positions may be randomly selected among the Nᵢ storage position(s) determined at 2004.

In some other examples, determining 1004 the one or more removal positions may be carried out by using at least a lookup table and/or a decision tree. In particular, the lookup table and/or the decision tree may be based on the accessibility data and may be configured to output information indicative of the one or more removal positions by using the cardinality of the set of sample container carriers. For example, with reference to the 16 groups of the storage device 300, the lookup table may read as follows:

**Table 2**

| Cardinality, C | One or more removal positions |
|---|---|
| C ≤ 5 | First C positions of A6 to E6 |
| C ≤ 10 | First C positions of A6 to E7 |
| C ≤ 15 | First C positions of A5 to E7 |
| C ≤ 20 | First C positions of A4 to E7 |
| C ≤ 25 | First C positions of A4 to E8 |
| C ≤ 30 | First C positions of A3 to E8 |
| C ≤ 35 | First C positions of (A4 to E7) U (F5 to J7) |
| C ≤ 40 | First C positions of (A4 to E7) U (F4 to J7) |
| C ≤ 45 | First C positions of (A4 to E8) U (F4 to J7) |
| C ≤ 50 | First C positions of (A3 to E8) U (F4 to J7) |
| C ≤ 55 | First C positions of (A3 to E8) U (F4 to J8) |
| C ≤ 60 | First C positions of (A3 to E8) U (F3 to J8) |
| C ≤ 75 | First C positions of (A3 to E11) U (F3 to J8) |
| C ≤ 85 | First C positions of (A1 to E11) U (F3 to J8) |
| C ≤ 100 | First C positions of (A1 to E11) U (F3 to J11) |
| C ≤ 110 | First C positions of (A1 to E11) U (F1 to J11) |
| C > 110 | 110 positions of (A1 to E11) U (F1 to J11) assigned to 110 sample container carriers of the C sample container carriers |

In table 2, the symbol "U" denotes the union of two plurality of storage positions. The first C positions of a plurality of storage positions of the first shelf 302 include the leftmost uppermost storage position of that plurality and the and the next C-1 positions, following a left-to-right and top-to-bottom sequence, similar to reading a page in English. For example, referring to fig. 7, the first eight positions (A3 to E8) are: A3, B3, C3, D3, E3, A4, B4, C4. The first C positions of a plurality of storage positions including a plurality of storage positions of the first shelf 302 and a plurality of storage position of the second shelf 302' include the leftmost uppermost storage position of the plurality of storage positions of the first shelf 302 and the next C-1 positions following a left-to-right and top-to-bottom sequence so that the next position after the rightmost lowermost position of the plurality of storage positions of the first shelf 302 is the leftmost uppermost storage position of the plurality of storage positions of the second shelf 302, similar to reading two pages in English. For instance, referring to fig. 7, the first 23 positions of (A4 to E7) U (F5 to J7) are A4 to E7, F5, G5, and H5.

Lookup table 2 is based on the accessibility score of the storage positions of the shelving units 302, 302'. In particular, lookup table 2 is obtained by taking into account the accessibility score of the storage positions and the requirement that, preferably, the removal positions for C sample container carriers are located close to one another, preferably in adjacent shelves. More particularly, when C ≤ 35, lookup table 2 distributes the removal positions for the C sample container carriers around the group with highest accessibility score, (group 306), even if it means avoiding storage positions with second highest accessibility (positions F6 to J6). When C > 35, the requirement for close proximity of removal positions would typically include positions with relatively low accessibility scores (group 312). However, lookup table 2 prevents this by distributing the removal positions into two disjoint clusters, one in the first shelving unit 302 and the other in the second shelving unit 302'. For example, if C ≤ 45 one cluster consists of positions A4 to E8 and the other cluster consists of positions F4 to J7.

In particular, determining 1004 the one or more removal positions comprises associating each of the C sample container carriers with a respective removal position of the C removal positions, e.g., as determined by using lookup table 2. For each sample container carrier, the removal position associated with that carrier is the removal position at which that sample container carrier is to be located. For example, the C sample container carriers are located in increasing order of their identifiers starting from the leftmost uppermost storage position of the C removal positions and following a left-to-right and top-to-bottom sequence, as described above. For example, if C equals 12 and the identifiers of the 12 carriers are 001, 002, 005, 007, 008, 010, 013, 017, 019, 024, 026, and 029 the association reads as follows:

| | | | |
|---|---|---|---|
| 001 | associated with A5; | 002 | associated with B5; |
| 005 | associated with C5; | 007 | associated with D5; |
| 008 | associated with E5; | 010 | associated with A6; |
| 013 | associated with B6; | 017 | associated with C6; |
| 019 | associated with D6; | 024 | associated with E6; |
| 026 | associated with A7; and | 029 | associated with B7. |

According to lookup table 2, when C exceeds 110, determining 1004 the one or more removal positions may comprise determining one or more removal positions by selecting 110 sample container carriers from the C sample container carriers. Each sample container carrier is associated with a unique three-digit identifier. These 110 carriers are chosen based on having the lowest identifier values. For instance, if C equals 125 and the identifiers of the 125 carriers are 001, 002, 003, ..., 122, 123, 124, 125, then the 110 selected carriers will be those with identifiers 001, 002, 003, ..., 108, 109, 110.

With reference to fig. 5, the method further comprises instructing 1006 the handling mechanism to position each sample container carrier of the set of sample container carriers at a respective position of the one or more removal positions. Instructing the handling mechanism may also be performed by the computer 30. In particular, the handling mechanism is instructed to position each sample container carrier of the set of sample container carriers in a respective removal position of the one or more determined removal positions. For instance, instructing of the handling mechanism may be triggered by a handling logic that does not require (but, e.g., may allow) human intervention.

In particular, in some cases, the set of sample container carriers consists of four sample container carriers, 001 to 004, and fourteen sample container carriers, 200 to213, are already positioned in the shelving units, trays, or drawers 102, 102', in particular at the storage positions A4 to E5 and A7 to D7 of the first group 106. In those cases, the one or more removal positions determined at 1004 are the storage positions A6, B6, C6, D6 of the first group 106, which is the group with the highest accessibility score. For instance, the four storage positions are selected randomly among the unoccupied storage positions of the second group 106. The handling mechanism is then instructed to position each of the sample container carriers 001 to 004 at a respective position of the positions A6, B6, C6, D6. Hence, the sample container carriers 001 to 004 are positioned at the removal positions A6, B6, C6, D6, as schematically shown in fig. 2.

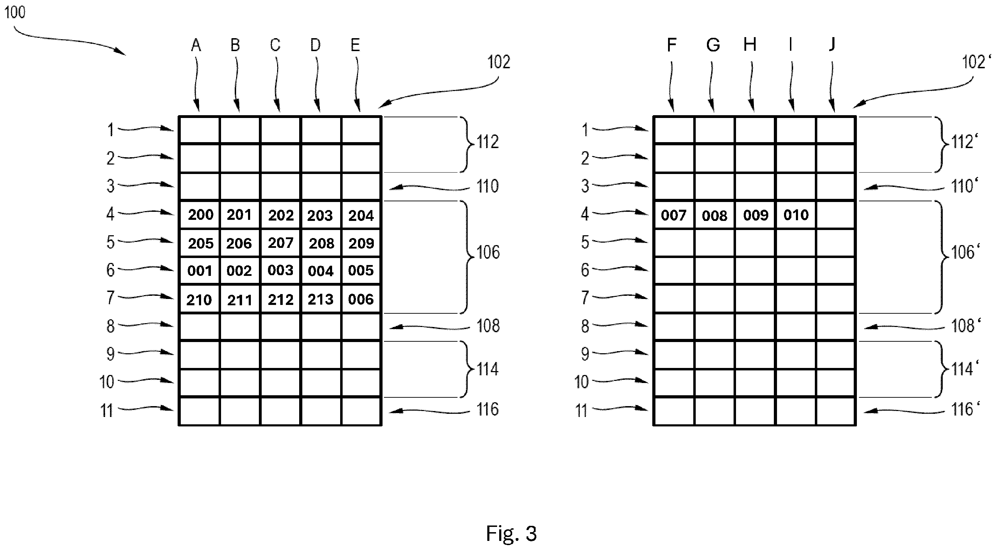

In particular, in some cases, the set of sample container carriers consists of ten sample container carriers, 001 to 010, and fourteen sample container carriers, 200 to 213, are already positioned in the shelving units, trays, drawers 102, 102', in particular at the storage positions A4 to E5 and A7 to D7 of the first group 106. In those cases, the one or more removal positions determined at 1004 are the storage positions A6 to D6, E7, and F4 to I4. In particular, the one or more removal positions comprise the six storage positions of the first group 106 which are not occupied (i.e., the positions A6 to D6 and E7) and four storage positions of the second group 106', which is the group with the next to highest accessibility score. For instance, the four storage positions of the second group 106' are selected randomly among the unoccupied storage positions of the second group 106'. The handling mechanism is then instructed to position each of the sample container carriers 001 to 010 at a respective position of the positions A6 to D6, E7, and F4 to I4. Hence, the sample container carriers 001 to 010 are positioned at the removal positions A6 to D6, E7, and F4 to I4, as schematically shown in **fig. 3****.**

For example, in some cases, the set of sample container carriers consists of twenty-nine sample container carriers, 001 to 029, and fourteen sample container carriers, 200 to 213, are already positioned in the shelving units, trays, or drawers 102, 102', in particular at the storage positions A4 to E5 and A7 to D7 of the first group 106. In those cases, the one or more removal positions determined at 1004 are the storage positions A6 to D6, E7, F4 to J7, and A8 to C8. In particular, the one or more removal positions comprise the six storage positions of the first group 106 which are not occupied (i.e., the positions A6 to D6 and E7), the twenty storage positions of the second group 106', and three storage positions of the third group 108,110 which is the group with the third highest accessibility score. For instance, the three storage positions are selected randomly among the unoccupied storage positions of the second group 108, 110. The handling mechanism is then instructed to position each of the sample container carriers 001 to 029 at a respective position of the positions A6 to E6, E7, F4 to J7, and A8 to C8. Hence, the sample container carriers 001 to 029 are positioned at the removal positions A6 to E6, E7, F4 to J7, and A8 to C8, as schematically shown in fig. 4.

In some other cases, with reference to fig. 7, the set of sample container carriers consists of forty-four sample container carriers and respective forty-four removal positions are determined 1004 by using lookup table 2 and are associated with the forty-four sample container carriers, as described above. Those removal positions are the storage positions A1 to E8 and F4 to I7. The handling mechanism is instructed to locate each sample container carrier of the forty-four sample container carriers at the respective removal position associated with that sample container carrier, as schematically shown in fig. 7.

Optionally, the method may comprise accessing 1002 the accessibility data, wherein the accessibility data comprises, for each storage position of a set of storage positions, information indicative of a respective accessibility score of said each respective storage position, wherein the set of storage positions is comprised in the plurality of storage positions. In particular, the set of storage position may consist of each of the storage positions A1 to E11 and F1 to J11 of the storage device 100, as described above and schematically depicted in figs. 2 to 4. In particular, the accessibility data comprises, for each storage position of the set of storage positions (e.g., of the storage positions A1 to E11 and F1 to J11), information indicative of the respective accessibility score of said each storage position. In particular, the accessibility score of each storage position is indicative of the degree of accessibility of that storage position. Accessing the accessibility data may be carried out by the computer 30, as schematically depicted in fig. 1 and described above.

Optionally, the method 1000 may comprise accessing 1010 removal data and determining 1014, based on the removal data, the set of sample container carriers. In particular, the removal data comprise, for each sample container carrier of one or more sample container carriers (which comprise the set of sample container carriers), respective information indicative of a removal status of that sample container carrier. The removal status of a sample container carrier may comprise information indicative of whether that sample container carrier is to be removed from the transportation line system or not. The removal status of each of the one or more sample container carriers may comprise information indicative of whether and/or when that sample container carrier is to be removed from the storage device. Said information may be a digital flag or tag of that sample container carrier.

Determining 1014 the set of sample container carriers may comprise determining, among the one or more sample container carriers, the sample container carriers which, according to the removal date, are ready for removal. If the number of those sample container carriers which are ready for removal is smaller than the number, M, of the storage positions A1-E11, F1-J11 which are not occupied, those sample container carriers constitute the set of sample container carriers. If the number of those sample container carriers which are ready for removal is greater than M, determining 1014 the set of sample container carriers may comprise selecting, e.g., randomly selecting, among those sample container carriers which are ready for removal, M sample container carriers which constitute the set of sample container carriers.

Optionally, the method 1000 may comprise determining 1012 the set of storage positions. In particular, determining 1012 the set of storage positions may comprise determining, among the plurality of storage positions A1-E11, F1-J11 of the storage device 100, the storage positions which are not occupied by a sample container carrier. Those unoccupied storage positions constitute the set of storage positions. That information may be provided for or to an external robot and/or human user, so that, for instance, the external robot and/or human user are informed about the storage position from which the first sample container carrier is to be picked up, how cautious the respective sample container carrier is to be handled, which security measures are to be taken, whether the sample container carrier is to be sent by express delivery, and the like. Additionally, or alternatively, that information is provided for an external handling device and/or for a graphical user interface. Furthermore, that information may comprise accessibility data or accessibility scores. The sample container carriers can thus be processed efficiently in accordance with safety and deadline specifications.

Optionally, the method 1000 may further comprise providing 1016 information, e.g., for an external handling device and/or for a graphical user interface, indicative of one or more of: the set of sample container carriers, the one or more removal positions, the categories of each sample container carrier of the set of sample container carriers, and the categories associated with the one or more removal positions. That information may be provided for or to an external robot and/or human user, so that, for instance, the external robot and/or human user are informed about the storage positions from which the first sample container carriers of the set of sample container carrier are to be picked up, how cautious those sample container carriers are to be handled, which security measures are to be taken, whether those sample container carriers is to be sent by express delivery, and the like. Additionally or alternatively, that information is provided for an external handling device and/or for a graphical user interface.

In particular, the one or more removal positions comprise the first removal position disclosed therein, and the set of sample container carriers comprises the first sample container carrier. In some examples, instructing 1006 the handling mechanism to position each sample container carrier of the set of sample container carriers at a respective position of the one or more removal positions comprises: (a) checking if the first removal position is free and, if the first removal position is not free, (b) instructing the handling mechanism to position the first sample container carrier to another storage position of the plurality of storage positions, (c) instructing the handling mechanism to move the other sample container carrier to another position, (d) checking whether the first removal position has become free and (e) instructing the handling mechanism to position the first sample container carrier to the first removal position after that position has become free.

In particular, the one or more removal positions comprise the first removal position disclosed therein. In some examples, determining 1004 the one or more removal positions may be further based on the first category data and the second category data. In those examples, the method 1000 may further comprise accessing the first category data and accessing the second category data. The first category data comprises, for each storage position of the set of storage positions, information indicative of a respective category of sample container carriers to be stored in said each storage position. The second category data comprise information on a category of the first sample container carrier. Determining 1004 the one or more removal positions may comprise determining, among the set of storage positions and by using the first category data and the second category data, at least one storage position, e.g., each storage position, such that the category of the first sample container carrier matches the respective category associated with that storage position, i.e., the category of the sample container carriers to be stored in that storage position.

According to the present invention, a set of elements (e.g., of storage positions or of sample container carriers) comprise one or more those elements. Hence, a set of elements may consist of a single element or comprise a plurality of elements.

As used herein the term "and/or" includes any and all combinations of one or more of the associated listed items and may be abbreviated as "/". Although some aspects have been described in the context of an apparatus, it is clear that these aspects also represent a description of the corresponding method, where a block or device may correspond to a method step or a feature of a method step or a part of the method. Analogously, aspects described in the context of a method also represent a description of a corresponding function, or feature of a corresponding apparatus or system.

### List of some reference signs

- A1-E11; F1-J11: storage positions
- 10: system
- 20: storage device
- 22: sample container carrier (rack)
- 30: computer
- 100: storage device
- 102, 102': shelving units, trays, or drawers
- 106: first group of storage positions
- 108, 110: third group of storage positions
- 112, 114: fifth group of storage positions
- 116: seventh group of storage positions
- 106': second group of storage positions
- 108', 110': fourth group of storage positions
- 112', 114': sixth group of storage positions
- 116': eighth group of storage positions
- 300: storage device
- 302: first shelving unit
- 302': second shelving unit
- 306-313, 306'-313': groups of storage positions
- 1000: flow chart of an exemplary method according to the present disclosure
- 1002: accessing accessibility data
- 1004: determining one or more removal positions
- 1006: instructing the handling mechanism1010 accessing removal data
- 1012: determining the set of storage positions
- 1014: determining the set of sample container carriers
- 1016: providing information, e.g., for an external handling device
- 2000: flow chart

## Claims

1. A computer-implemented method for instructing to position sample container carriers within a storage device (100),
wherein the storage device is configured to accommodate a plurality of sample container carriers; and
wherein the storage device comprises:
- a plurality of storage positions (A1 to E11), each adapted for holding a sample container carrier;
- a handling mechanism for positioning the plurality of sample container carriers on the plurality of storage positions;
- an openable access section for removing one or more sample containers carriers from the storage device, which provides, when open, access to at least some of the plurality of storage positions;
the method comprising:
- determining, based on accessibility data, one or more removal positions of the set of storage positions for a first sample container carrier, wherein the accessibility data comprise, for each storage position of a set of storage positions, information indicative of a respective accessibility score of said each storage position, wherein the set of storage positions is comprised in the plurality of storage positions; and
- instructing the handling mechanism to position the first sample container carrier at a first removal position of the one or more removal positions.

2. The method of claim 1,
further comprising:
- accessing removal data, wherein the removal data comprises information indicative of a removal status of the first sample container carrier; and
- determining whether, based on the removal data, one or more removal positions of the set of storage positions are to be determined for the first sample container carrier,
wherein determining the one or more removal positions and instructing the handling mechanism to position the first sample container carrier are carried out if it is determined that one or more removal positions are to be determined for the first sample container carrier.

3. The method according to claim 2,
wherein:
- determining whether one or more removal positions of the set of storage positions are to be determined for the first sample container carrier comprises determining whether, according to the removal status of the first sample container carrier, the first sample container carrier is to be removed, and/or
- determining the one or more removal positions and instructing the handling mechanism to position the first sample container carrier are carried out if, according to the removal status of the first sample container carrier, the first sample container carrier is to be removed.

4. The method according to claims 2 or 3,
wherein the removal data comprises information indicative of one or more of:
i. whether the first sample container carrier is to be removed;
ii. when the first sample container carrier is to be removed; and
iii. a priority of the removal of the first sample container carrier,
and wherein determining the one or more removal positions is based on the removal data.

5. The method according to any one of the preceding claims,
further comprising:
- accessing first category data, wherein the first category data comprises, for each storage position of the set of storage positions, information indicative of a respective category of sample container carriers to be stored in said each storage position; and
- accessing second category data comprising information on a category of the first sample container carrier;
and wherein determining the one or more removal positions is further based on the first category data and the second category data.

6. The method according to the preceding claim,
wherein the category of the first sample container carrier is related to one or more of:
i. one or more tests already performed on at least one sample in the first sample container carrier;
ii. whether a rerun and/or a reflex is needed for at least one sample in the first sample container carrier;
iii. which rerun and/or reflex is needed for at least one sample in the first sample container carrier;
iv. how dangerous is at least one sample in the first sample container carrier;
v. a user that is supposed to handle the first sample container carrier;
vi. a final placement location of the first sample container carrier;
vii. one or more final placement conditions of the first sample container carrier;
viii. a reprocessing probability of at least one sample in the first sample container carrier; and
ix. an expiration time of at least one sample in the first sample container carrier.

7. The method according to any one of the preceding claims,
wherein, for each storage position of the set of storage positions, information indicative of a respective accessibility score of said each respective storage position is indicative of one of: best accessibility, good accessibility, limited accessibility, and no accessibility.

8. The method according to any one of the preceding claims,
wherein determining the one or more removal positions comprises determining, based on the accessibility data, the one or more removal positions for a set of sample container carriers, the set of sample container carriers comprising the first sample container carrier; and
wherein instructing the handling mechanism to position the first sample container carrier at the first removal position of the one or more removal positions comprises instructing the handling mechanism to position each sample container carrier of the set of sample container carriers at a respective position of the one or more removal positions.

9. The method according to the preceding claim,
further comprising assigning to each sample container carrier of the set of sample container carriers the respective position of the one or more removal positions according to one or more assignment criteria.

10. The method according to any one of the preceding claims,
further comprising:
- providing information indicative of one or more of: the first sample container carrier, the first removal position, the category of the first sample container carrier, and the category associated with the first removal position.

11. The method according to any one of the preceding claims,
wherein instructing the handling mechanism to position the first sample container carrier at the first removal position
comprises:
- checking if the first removal position is free;
and, if the first removal position is occupied with another sample container carrier,
- instructing the handling mechanism to position the first sample container carrier to a first storage position of the plurality of storage positions, and/or
- instructing the handling mechanism to move the other sample container carrier to a second storage position of the plurality of storage positions.

12. The method according to any one of the preceding claims,
wherein determining the one or more removal positions of the set of storage positions is further based on one or more determination requirements.

13. A computer program product
comprising instructions which, when the program is executed by a computing system, cause the computing system to carry out the method of any of the preceding claims.

14. A computing device
comprising a processor configured to carry out the method according to any one of the claims 1 to 12.

15. A storage system (10)
comprising the computing device according to claim 14 and a storage device (10), wherein the storage device is configured to accommodate a plurality of sample container carriers (22) and further comprises:
- a plurality of storage positions (A1 to E11), each adapted for holding a sample container carrier;
- a handling mechanism for positioning the plurality of sample container carriers on the plurality of storage positions;
- an openable access section for removing one or more sample container carriers from the storage device, which provides, when open, access to at least some of the plurality of storage positions.
